# EUROPÄISCHE PATENTSCHRIFT

(11) **EP 1 254 554 B1**
(45) Veröffentlichungstag und Bekanntmachung des Hinweises auf die Patenterteilung: **06.04.2011**
(21) Anmeldenummer: 01921145.7
(22) Anmeldetag: 09.02.2001
(51) Int. Cl.: H04M 3/533, H04M 7/00

(54) **SERVERSYSTEM ZUM BEREITSTELLEN VON TEILNEHMERINDIVIDUELLEN INFORMATIONEN FÜR TEILNEHMER IN ZUMINDEST EINEM KOMMUNIKATIONSNETZ**
SERVER SYSTEM FOR PREPARATION OF USER-SPECIFIC INFORMATION FOR USERS IN AT LEAST ONE COMMUNICATION NETWORK
SYSTEME SERVEUR PERMETTANT DE METTRE A LA DISPOSITION D'ABONNES DES INFORMATIONS PROPRES A CHAQUE ABONNE, DANS AU MOINS UN RESEAU DE COMMUNICATION

(30) Priorität: 10.02.2000 DE 10005776
(43) Veröffentlichungstag der Anmeldung: 06.11.2002
(73) Patentinhaber: SIEMENS AKTIENGESELLSCHAFT, 80333 München (DE)
(72) Erfinder: BURGARD, Thomas, 80336 München (DE); HOCHHEIM, York, 80469 München (DE); KRETEN, Axel, 82178 Puchheim (DE)
(86) Internationale Anmeldenummer: PCT/DE2001/000505
(87) Internationale Veröffentlichungsnummer: WO 2001/060034

(56) Entgegenhaltungen:
- EP-A- 0 845 894

## Beschreibung

Die vorliegende Erfindung betrifft ein Serversystem zum Bereitstellen von teilnehmerindividuellen Informationen für Teilnehmer in zumindest einem Kommunikationsnetz.

Die vorliegende Erfindung bezieht sich dabei insbesondere auf das Bereitstellen von Statusinformationen bezüglich dem Status von Mailbox-Nachrichten von zumindest einem dienstespezifischen Mailbox-Server mit zumindest einem dienstespezifischen und zumindest einem kommunikationsnetzspezifischen Nachrichtenformat.

Die Verwendung von jeweils für einen informationstechnischen Dienst ausgestaltete Mailboxen - z.B. für die Verarbeitung von Sprachinformationen, Faxinformationen, E-Mail-Informationen und dergleichen - findet immer breitere Verwendung. In der Regel werden derartige dienstespezifischen Mailbox-Nachrichten jeweils auf einem Mailbox-Server gespeichert, wobei der betreffende Teilnehmer, für den neu ankommende Mailbox-Nachrichten bestimmt sind, entweder selbständig regelmäßig seine Mailbox-Nachrichten überprüfen und gegebenenfalls abrufen muß, oder der Teilnehmer wird an seinem zugeordneten Telefonapparat, wie z.B. am Handy, am Festapparat zu Hause oder im Büro, mittels einer Statusinformation vom Eintreffen einer neuen Mailbox-Nachricht informiert. Nachdem ein Teilnehmer, dergestalt von einer neu eingetroffenen Mailbox-Nachricht Kenntnis erhalten hat, kann er sie vom jeweiligen Mailbox-Server abholen und auf seinem Telefonapparat anhören bzw. anzeigen lassen.

Beispielsweise liefert das im ETSI-Standard (European Telecommunication Standard Institute) definierte MWI (Message Waiting Indication) Leistungsmerkmal die Status-Information, daß eine neue Mailbox-Nachricht vorliegt, nur jeweils von einem getrennten Mailbox-Server (Sprachmail, Faxmail, E-Mail, etc.). Diese Statusinformation wird am Telefonendgerät (analoges Telefon, ISDN-Telefon, Handy oder dergleichen) des betreffenden Teilnehmers angezeigt. Je nach Anzeigemöglichkeit am Telefonendgerät und Signalisierungsmöglichkeit von der zugeordneten Vermittlungsstelle zum Telefonendgerät (analoges Telefon mit zusätzlicher Signalisierung, z.B. mittels Frequency Shift Keying FSK oder ISDN-Telefon mit funktionalem Protokoll oder Stimulus-Protokoll) kann die Anzeige einfach sein, wie z.B. "Nachricht liegt vor", oder komfortabel, wobei z.B. die Anzahl und Art neu eingegangener Mailbox-Nachrichten, Eingangsdatum und -uhrzeit und dergleichen angezeigt werden.

Nachteilig an dem oben skizzierten System zur automatischen Bereitstellung von Statusinformationen bezüglich dem Status von Mailbox-Nachrichten ist, daß die Statusinformationen nur an Telefonapparaten bereitgestellt werden.

In EP A 0845 894 ist ein unified messaging system beschrieben, welches eine Serversystem zum Bereitstellen von teilnehmerindividuellen Informationen für Teilnehmer in einem Kommunikationsnetz umfasst. Das System ermöglicht es einem Teilnehmer sowohl über das leitungsvermittelnde Telefonnetz als auch über das paketorietierte Datennetz auf gespeicherte Nachrichten zuzugreifen. Dies müssen vom Teilnehmer abgerufen werden.

Der Erfindung liegt die Aufgabe zugrunde, die Bereitstellung von Statusinformationen zu verbessern.

Diese Aufgabe wird durch ein Serversystem gemäß den Merkmalen des Patentanspruchs 1 und durch ein Verfahren gemäß den Merkmalen des Patentanspruchs 8 gelöst.

Des wesentliche Aspekt der erfindungsgemäßen Servereinrichtung zum Bereitstellen von teilnehmerindividuellen Informationen für Teilnehmer in zumindest einem Kommunikationsnetz besteht darin, daß eine Sammeleinrichtung zum Sammeln von teilnehmerindividuellen Statusinformationen bezüglich dem Status von Mailbox-Nachrichten von zumindest einem dienstespezifischen Mailbox-Server mit zumindest einem dienstespezifischen und kommunikationsnetzspezifischen Nachrichtenformat angeordnet ist, wobei sich die teilnehmerindividuellen Statusin formationen auf Mailbox-Nachrichten beziehen, die für diesen Teilnehmer in dem zumindest einen Mailbox-Server gespeichert sind. Desweiteren ist eine Registrier-Einrichtung zum Registrieren der Aktivität eines Teilnehmers an zumindest einem Kommunikationsendgerät in zumindest einem des zumindest einen Kommunikationsnetzes angeordnet, wobei von der RegistrierEinrichtung die gesammelten Statusinformationen von der Sammeleinrichtung über zumindest eines des zumindest einen Kommunikationsnetzes an zumindest eines des zumindest einen Kommunikationsendgerätes des jeweiligen aktiven Teilnehmers übermittelt werden.

Die vorliegende Erfindung ermöglicht somit auf einfache und effiziente Weise die Anzeige von Statusinformationen an einem Kommunikationsendgerät z.B. Computer, an dem ein Teilnehmer in einem Kommunikationsnetz, wie z.B. dem Internet, momentan aktiv ist. Das Anzeigemedium Computer erlaubt auf seinem Bildschirm eine umfangreiche und komfortable Anzeige der Zustände der Mailboxen des jeweiligen Teilnehmers. Der Teilnehmer kann auch mehreren Kommunikationsnetzen zugeordnet sein, d.h. der Teilnehmer hat mehrere geeignete Kommunikationsendgeräte in mehreren Kommunikationsnetzen - z.B. Internet und mobiles und/oder drahtgebundenes Fernsprechnetz - angeordnet. Das erfindungsgemäße Serversystem kann dabei beispielsweise auf einem separaten Server implementiert sein, der mit einer digitalen Vermittlungsstelle eines Fernsprechnetzes gekoppelt ist. Vorteilhaft werden die Statusinformation der Mailboxen eines Teilnehmers mit Hilfe des bereits im ETSI-Standard definierten Leistungsmerkmals "Message Waiting Indication" bereitgestellt, womit auf einfache und effiziente Weise die Statusinformation der Mailboxen eines Teilnehmers über zumindest ein Kommunikationsnetz, wie z.B. dem Internet, das mit dem erfindungsgemäßen Serversystem verbunden ist, bereitgestellt werden. Der Teilnehmer kann beispielsweise auch mehreren organisatorisch oder räumlich getrennten mobilen Kommunikationsnetzen zugeordnet sein wobei in jedem Mobilfunknetz Mailbox-Nachrichten für den Teilnehmer gespeichert werden.

Vorteilhafterweise stellt die Sammeleinrichtung die Statusinformationen der Registriereinrichtung über eine Anwenderprogramm-Schnittstelle bereit.

Das Kommunikationsnetz ist vorteilhafterweise das Internet oder ein mobiles oder drahtgebundenes Fernsprechnetz, wobei die Registriereinrichtung eine Datenbank mit Kennungen und/oder Adressen möglicher Teilnehmer aufweist. Die Registriereinrichtung kann dabei bei Registrierung eines aktiven Teilnehmers erkennen, ob der Teilnehmer von seinem eigenen für ihn registrierten Kommunikationsendgerät - beispielsweise Computer - z.B. eigene E164#, oder unter seiner für ihn registrierten Kennung auf einem fremden Computer, z.B. fremde E164#, aktiv ist und die Statusinformationen dem entsprechenden Computer zuführen.

Vorteilhafterweise führt die Registriereinrichtung die Statusinformation dem jeweiligen Kommunikationsendgerät zu, sobald sie diese von der Sammeleinrichtung erhält. Alternativ kann die Registriereinrichtung die Statusinformationen dem jeweiligen Kcmmunikationsendgerät - z.B. Computer - erst dann zuführen, wenn sie eine entsprechende Anfrage von dem jeweiligen Computer erhalten hat.

Die vorliegende Erfindung ermöglicht somit eine umfangreiche und komfortable Bereitstellung der gesammelten Statusinformationen von Mailbox-Nachrichten eines Teilnehmers an zumindest einem Kommunikationsendgerät.

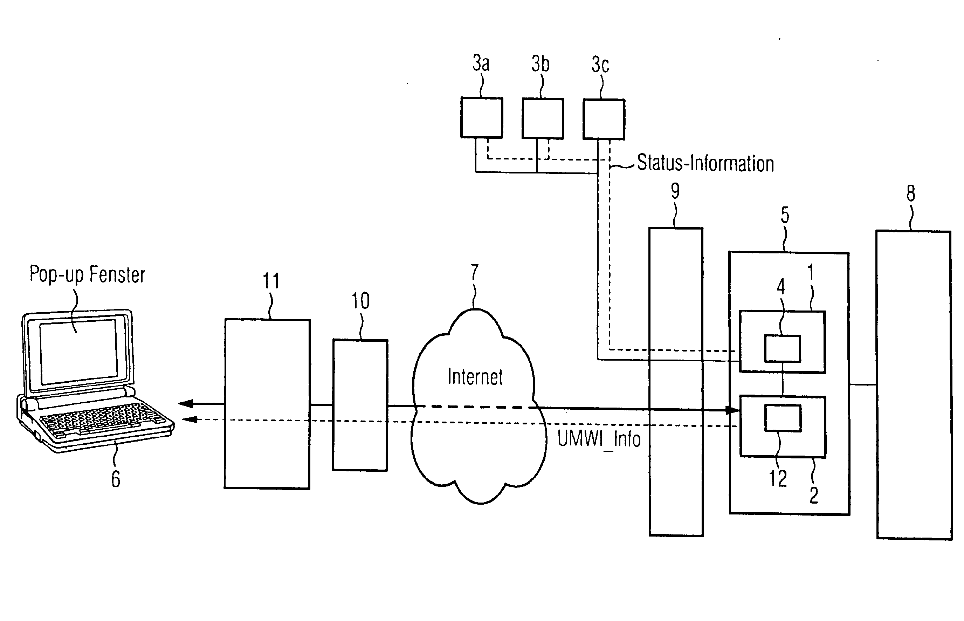

Die vorliegende Erfindung wird im Folgenden anhand eines bevorzugten Ausführungsbeispieles unter Bezug auf die beigefügte einzige Figur 1 näher erläutert, die den schematischen Aufbau eines Kommunikationssystems mit einem erfindungsgemäßen Serversystem darstellt.

Figur 1 zeigt in allgemeiner schematischer Darstellung ein Kommunikationssystem, bei dem eine erfindungsgemäße Sammeleinrichtung 1 zum Sammeln von Statusinformationen bezüglich dem Status von Mailbox-Nachrichten von mehreren Mailbox-Servern 3a, 3b, 3c mit unterschiedlichen Nachrichtenformaten und eine Registriereinrichtung 2 zum Registrieren der Aktivität eines Teilnehmers an einem Computer 6 in einem Kommunikationsnetz 7 in einer Servereinheit 5 implementiert sind.

Die Sammeleinrichtung 1 ist mit mehreren Mailbox-Servern 3a, 3b, 3c verbunden, wobei beispielsweise der erste Mailbox-Server zum Zwischenspeichern von Sprach-Mails dient, der zweite Mailbox-Server 3b zum Zwischenspeichern von Fax-Mails dient und der dritte Mailbox-Server 3c zum Zwischenspeichern von E-Mails dient. Die Mailbox-Server sind weiterhin mit einem Kommunikationsnetz, wie z.B. dem Internet 7 und/oder einem Fernsprechnetz verbunden, über das entsprechende Mailbox-Nachrichten zu ihnen gelangen. Sobald eine neue Mailbox-Nachricht auf einem der Mailbox-Server 3a, 3b, 3c eintrifft, wird eine entsprechende Statusinformation an die Sammeleinrichtung 1 versendet. Alternativ kann die Sammeleinrichtung 1 die Mailbox-Server 3a, 3b, 3c in regelmäßigen Abständen abfragen.

Die Sammeleinrichtung 1 umfaßt eine Anwenderprogramm-Schnittstelle 4, über die die von den Mailbox-Servern 3a, 3b, 3c erhaltenen Statusinformationen in ein entsprechendes Format umgewandelt und der Registriereinrichtung 2 zugeführt werden. Die Registriereinrichtung 2 umfaßt eine Datenbank 12 mit den Kennungen und den Adressen registrierter und zugelassener Teilnehmer bzw. deren Computern. Sobald ein Teilnehmer im Internet 7 aktiv ist, beispielsweise am Computer 6, wird die Aktivität dieses Teilnehmers von der Registriereinrichtung 2 registriert. Neue Statusinformationen, die die Registriereinrichtung 2 von der Sammeleinrichtung 1 erhält, werden dann von der Registriereinrichtung 2 dem Teilnehmer am Computer 6 beispielsweise in Form eines Pop-Up Fensters bereitgestellt. Die Statusinformationen umfassen dabei die Gesamtinformation aller dem Teilnehmer zugeordneten Mailboxen. Dabei können die Statusinformationen dem Teilnehmer entweder automatisch bereitgestellt werden, sobald sie von der Sammeleinrichtung 1 der Registriereinrichtung 2 zugeführt werden, oder der Teilnehmer bzw. der Computer 6 fragen die Registriereinrichtung 2 regelmäßig in einem automatisierten Verfahren ab.

Die dem Teilnehmer am Computer 6 dargestellten Statusinformationen enthalten wie erwähnt eine Gesamtaussage über den Status der dem Teilnehmer zugeordneten Mailboxen auf den Mailbox-Servern 3a, 3b, 3c, wobei der Umfang der Statusinformationen variieren kann. Die Statusinformationen, die dem Teilnehmer am Computer 6 bereitgestellt werden, können beispielsweise lediglich einen einfachen Hinweis enthalten, daß eine oder mehrere neue Mailbox-Nachrichten in den Mailbox-Servern 3a, 3b, 3c eingetroffen sind und abgerufen werden können. Alternativ kann eine komfortable Anzeige aller neuen Mailbox-Nachrichten einschließlich des Typs, der Anzahl, des Eingangsdatums, der Eingangsuhrzeit, des Absenders usw. enthalten sein. Weiterhin kann die Möglichkeit bereitgestellt werden, aus der Anzeige der Statusinformationen heraus direkt eine oder mehrere bestimmte Mailbox-Nachricht abzurufen.

Der Computer 6, an dem dem jeweiligen Teilnehmer die Statusinformationen seiner Mailboxen angezeigt werden, kann entweder der für diesen Teilnehmer registrierte Computer oder ein anderer Computer sein, an dem der Computer unter seiner eigenen persönlichen Kennung aktiv ist.

Im dargestellten Beispiel ist die Servereinheit 5, die die erfindungsgemäße Sammeleinrichtung 1 und die erfindungsgemäße Registriereinrichtung 2 enthält, mit einer digitalen Vermittlungsstelle 8, z.B. einer EWSD-Vermittlungsstelle gekoppelt, die wiederum Teil eines Fernsprechnetzes ist. Die Servereinheit 5 stellt dabei optional über eine Firewall 9 eine Verbindung zum Internet 7 her. Der Computer 6, an dem einem Teilnehmer seine Statusinformationen angezeigt werden, ist, über einen lokalen Knoten 10 und eine Schaltstelle 11 mit dem Internet 7 verbunden.

Die Sammeleinrichtung 1 und die Registriereinrichtung 2 sind beispielsweise als Softwareprogramme in dem Serversystem 5 implementiert. Alternativ kann die Sammeleinrichtung 1 aber auch in der digitalen Vermittlungsstelle 8 implementiert sein. Die Sammeleinrichtung 1 führt dabei die Funktionen des im ETSI-Standard definierten MWI-Leistungsmerkmals aus, mit Hilfe dessen eine Gesamtinformation in Bezug auf den Status von Mailbox-Nachrichten von mehreren Mailbox-Servern 3a, 3b, 3c mit unterschiedlichen Nachrichtenformaten für jeweils einen Teilnehmer bereitstellt werden. Die Servereinheit 5 ist beispielsweise eine sogenannte offene Dienstleistungseinheit, die eine Verbindung zwischen einem Fernsprechnetz und dem Internet herstellt und eine gegenseitige Bereitstellung jeweiliger Dienste ermöglicht.

## Patentansprüche

1. Serversystem zum Bereitstellen von teilnehmerindividuellen Informationen für Teilnehmer in zumindest einem Kommunikationsnetz, **gekennzeichnet durch**
- eine Sammeleinrichtung (1) zum Sammeln von teilnehmerindividuellen Statusinformationen, die sich auf Mailbox-Nachrichten beziehen, die für einen Teilnehmer in zumindest einem dienstespezifischen Mailbox-Server (3a, 3b, 3c) gespeichert sind, und
- eine Registriereinrichtung (2) zum Registrieren der Aktivität eines Teilnehmers an zumindest einem Kommunikationsendgerät (6) in zumindest einem Kommunikationsnetz (7), zum Empfangen der teilnehmerindividuellen Statusinformationen von der Sammeleinrichtung (1) und zum Senden der teilnehmerindividuellen Statusinformationen an den jeweiligen Teilnehmer, wobei
- die Registriereinrichtung (2) dann, wenn sie einen Teilnehmer an zumindest einem Kommunikationsendgerät (6) als aktiv registriert hat, die für diesen Teilnehmer empfangenen Statusinformationen automatisch an das zumindest eine Kommunikationsendgerät (6) sendet.

2. Serversystem gemäß Anspruch 1,
**dadurch gekennzeichnet,**
**daß** die Sammeleinrichtung (1) die Statusinformationen der Registriereinrichtung (2) über eine Anwenderprogramm-Schnittstelle (4) bereitstellt.

3. Serversystem gemäß Anspruch 1 oder 2,
**dadurch gekennzeichnet,**
**daß** das zumindest eine Kommunikationsnetz (7)
- das Internet ist oder ein auf TCP/IP-Protokollen basierendes Kommunikationsnetz repräsentiert oder als paketorientiertes oder zellenorientiertes Kommunikationsnetz ausgestaltet ist, wobei die Registriereinrichtung (2) eine Datenbank (12) mit Kennungen und/oder Adressen möglicher Teilnehmer aufweist, oder
- ein mobiles oder drahtgebundenes Fernsprechnetz ist, wobei Rufnummern möglicher Teilnehmer in der Datenbank (12) oder in einer weiteren Datenbank gespeichert werden.

4. Serversystem gemäß einem der Ansprüche 1 bis 3,
**dadurch gekennzeichnet,**
**daß** das zumindest eine Kommunikationsendgerät (6) als drahtgebundenes oder drahtloses Fernsprechendgerät oder als Computer oder als Multimedia-Kommunikationsendgerät ausgestaltet ist.

5. Serversystem gemäß Anspruch 4,
**dadurch gekennzeichnet,**
**daß** die Registriereinrichtung (2) bei Registrierung eines aktiven Teilnehmers erkennt, ob der Teilnehmer von seinem eigenen für ihn registrierten Computer oder unter seiner für ihn registrierten Kennung auf einem fremden Computer aktiv ist und die Statusinformationen dem entsprechenden Computer zuführt.

6. Serversystem gemäß einem der Ansprüche 1 bis 5,
**dadurch gekennzeichnet,**
**daß** die Registriereinrichtung (2) die teilnehmerindividuellen Statusinformationen dem zumindest einem Kommunikationsendgerät zuführt, sobald sie sie von der Sammeleinrichtung (1) erhält.

7. Verfahren zum Bereitstellen von teilnehmerindividuellen Informationen für Teilnehmer in zumindest einem Kommunikationsnetz, demgemäß
- teilnehmerindividuelle Statusinformationen, die sich auf Mailbox-Nachrichten beziehen, die für einen Teilnehmer in zumindest einem dienstespezifischen Mailbox-Server (3a, 3b, 3c) gespeichert sind, von einer Sammeleinrichtung (1) gesammelt werden,
- durch eine Registriereinrichtung (2) die Aktivität eines Teilnehmers an zumindest einem Kommunikationsendgerät (6) in zumindest einem Kommunikationsnetz (7) registriert wird, sowie teilnehmerindividuelle Statusinformationen von der Sammeleinrichtung (1) empfangen werden, sowie teilnehmerindividuelle Statusinformationen an den jeweiligen Teilnehmer und gesendet werden, wobei
- dann, wenn von der Registriereinrichtung (2) ein Teilnehmer an zumindest einem Kommunikationsendgerät (6) als aktiv registriert wurde, die für diesen Teilnehmer empfangenen Statusinformationen automatisch an das zumindest eine Kommunikationsendgerät (6) gesendet werden.

8. Verfahren nach Anspruch 7,
**dadurch gekennzeichnet,**
**daß** teilnehmerindividuelle, dienstespezifische Mailbox-Nachrichten mit zumindest teilweise unterschiedlichen kommunikationsnetzspezifischen und/oder dienstespezifischen Nachrichtenformat in zumindest einem des zumindest einen Kommunikationsnetzes gespeichert werden.

9. Verfahren nach Anspruch 7 oder 8,
**dadurch gekennzeichnet, ,**
**daß** die dienstespezifischen Mailbox-Nachrichten in zumindest einem zumindest einen informationstechnischen Dienst realisierenden Mailbox-Server gespeichert werden, wobei die Mailbox-Nachrichten ein an den jeweiligen informationstechnischen Dienst angepaßtes Nachrichtenformat aufweisen.

10. Verfahren nach einem der Ansprüche 1 bis 9,
**dadurch gekennzeichnet,**
**daß** Statusinformationen von
- Mailbox-Nachrichten eines informationstechnischen Dienstes innerhalb eines Kommunikationsnetzes, und/oder
- Mailbox-Nachrichten mehrerer informationstechnischer Dienste innerhalb eines Kommunikationsnetzes, und/oder
- Mailbox-Nachrichten eines informationstechnischen Dienstes innerhalb mehrerer Kommunikationsnetze und/oder
- Mailbox-Nachrichten mehrerer informationstechnischer
Dienste innerhalb mehrerer Kommunikationsnetze gesammelt werden.

11. Verfahren nach einem der Ansprüche 7 bis 10,
**dadurch gekennzeichnet,**
**daß** der informationstechnische Dienst
- einen Dienst zum Speichern und zur Anzeige und Übermittlung von FAX-Informationen, und/oder
- einen Sprachspeicherdienst zum Speichern und zur Anzeige und Übermittlung von Sprachinformationen, und/oder
- einen Nachrichten-Speicherdienst zum Speichern und zur Anzeige und Übermittlung von elektronischen Nachrichten oder E-Mails oder SMS-Nachrichten
umfaßt und in zumindest einem des zumindest einem Kommunikationsnetzes realisiert ist.

12. Verfahren nach einem der Ansprüche 7 bis 11,
**dadurch gekennzeichnet,**
**daß** die teilnehmerindividuellen Statusinformationen über zumindest ein an das jeweilige Kommunikationsnetz angepaßtes und dem jeweiligen Teilnehmer zugeordnetes Kommunikationsendgerät ausgegeben werden oder abrufbar sind.

13. Verfahren nach Anspruch 12,
**dadurch gekennzeichnet,**
**daß** die teilnehmerindividuellen Statusinformationen über ein drahtgebundenes oder drahtloses Fernsprechendgerät oder über einen Computer oder über ein Multimedia-Kommunikationsendgerät ausgegeben werden oder abrufbar sind.

14. Verfahren nach einem der Ansprüche 7 bis 13,
**dadurch gekennzeichnet,**
**daß** eine Aktivität des jeweiligen Teilnehmers in zumindest einem des zumindest einen Kommunikationsnetzes erfaßt bzw. registriert wird,
**daß** die teilnehmerindividuellen Statusinformationen an den jeweiligen im jeweiligen Kommunikationsnetz aktiven Teilnehmer übermittelt werden.

15. Verfahren nach einem der Ansprüche 7 bis 14,
**dadurch gekennzeichnet,**
**daß** die gesammelten Statusinformationen über eine Anwenderprogramm-Schnittstelle bereitgestellt werden.

16. Verfahren nach einem der Ansprüche 7 bis 15,
**dadurch gekennzeichnet,**
**daß** das zumindest eine Kommunikationsnetz
- das Internet ist oder ein auf TCP/IP-Protokollen basierendes Kommunikationsnetz repräsentiert oder als paketorientiertes oder zellenbasiertes Kommunikationsnetz ausgestaltet ist, wobei Kennungen und/oder Adressen möglicher Teilnehmer in einer Datenbank gespeichert werden, oder
- ein mobiles oder drahtgebundenes Fernsprechnetz ist, wobei Rufnummern möglicher Teilnehmer in der Datenbank oder in einer weiteren Datenbank gespeichert werden.

17. Verfahren gemäß Anspruch 16,
**dadurch gekennzeichnet,**
**daß** die für einen Teilnehmer gesammelten Statusinformationen an die zumindest eine den jeweiligen Teilnehmer in zumindest einem des zumindest einen Kommunikationsnetz adressierende und entsprechend gespeicherte Kennung und/oder Adresse und/oder Rufnummer übermittelt werden.

18. Verfahren nach einem der Ansprüche 13 bis 17,
**dadurch gekennzeichnet,**
**daß** bei Registrierung eines aktiven Teilnehmers erkannt wird, ob der Teilnehmer von seinem eigenen für ihn registrierten Computer oder unter seiner für ihn registrierten Kennung auf einem fremden Computer aktiv ist, und die teilnehmerindividuellen Statusinformationen dann dem entsprechenden Computer zugeführt werden.

19. Verfahren gemäß einem der Ansprüche 10 bis 18,
**dadurch gekennzeichnet,**
**daß** die teilnehmerindividuellen Statusinformationen dem jeweiligen Kommunikationsendgerät zugeführt werden, sobald sie von den Mailbox-Servern erhalten wurden.

20. Verfahren gemäß einem der Ansprüche 7 bis 19,
**dadurch gekennzeichnet,**
**daß** die gesammelten, teilnehmerindividuellen Statusinformationen mit Hilfe des gemäß dem ETSI-Standard ausgestalteten Leistungsmerkmals "Message Waiting Indication" an den jeweiligen Teilnehmer übermittelt werden.

## Claims

1. Server system for providing subscriber-specific information for subscribers in at least one communications network, **characterized by**
- a collecting device (1) for collecting subscriber-specific status information, which relates to mailbox messages which are stored for a subscriber in at least one service-specific mailbox server (3a, 3b, 3c), and
- a registration device (2) for registration of the activity of a subscriber at at least one communications terminal (6) in at least one communication network (7), for reception of the subscriber-specific status information from the collecting device (1), and for transmission of the subscriber-specific status information to the respective subscriber, wherein
- the registration device (2) automatically sends the status information received for a subscriber to at least one communication terminal (6) when it has registered this subscriber as being active at the at least one communication terminal (6).

2. Server system according to Claim 1,
**characterized**
**in that** the collecting device (1) provides the status information for the registration device (2) via a user program interface (4).

3. Server system according to Claim 1 or 2,
**characterized**
**in that** the at least one communications network (7)
- is the Internet or represents a communications network which is based on TCP/IP protocols, or is in the form of a packet-oriented or cell-oriented communications network, with the registration device (2) having a databank (12) with identifiers and/or addresses of possible subscribers, or
- being a mobile or wire-connected telephone network, with telephone numbers of possible subscribers being stored in the databank (12) or in a further databank.

4. Server system according to one of Claims 1 to 3,
**characterized**
**in that** the at least one communications terminal (6) is in the form of a wire-connected or wire-free telephone terminal, or of a computer or of a multimedia communications terminal.

5. Server system according to Claim 4,
**characterized**
**in that** the registration device (2) identifies, on registration of an active subscriber, whether the subscriber is active from his own computer, which is registered for him, or on some other computer using his identifier, which is registered for him.

6. Server system according to one of Claims 1 to 5,
**characterized**
**in that** the registration device (2) supplies the subscriber-specific status information to the at least one communications terminal as soon as it receives this status information from the collecting device (1).

7. Method for providing subscriber-specific information for subscribers in at least one communications network, according to which:
- subscriber-specific status information which relates to mailbox messages which are stored for a subscriber in at least one service-specific mailbox server (3a, 3b, 3c) is collected by a collecting device (1),
- the activity of a subscriber at at least one communication terminal (6) in at least one communication network (7) is registered by a registration device (2), subscriber-specific status information is received by the collecting device (1), and subscriber-specific status information is transmitted to the respective subscriber, wherein
- when the registration device (2) has registered a subscriber as being active at at least one communication terminal (6), the status information received for this subscriber is automatically sent to the at least one communication terminal (6)."

8. Method according to Claim 7,
**characterized**
**in that** subscriber-specific, service-specific mailbox messages are stored in at least one of the at least one communications networks using at least a partially different communications-network-specific and/or service-specific message format.

9. Method according to Claim 7 or 8,
**characterized**
**in that** the service-specific mailbox messages are stored in at least one mailbox server which provides at least one information service, with the mailbox messages having a message format which is matched to the respective information service.

10. Method according to one of Claims 1 to 9,
**characterized**
**in that** the status information is collected from
- mailbox messages of an information service within a communications network, and/or
- mailbox messages of a number of information services within a communications network, and/or
- mailbox messages of an information service within a number of communications networks, and/or
- mailbox messages of a number of information services within a number of communications networks.

11. Method according to one of Claims 7 to 10,
**characterized**
**in that** the information service comprises
- a service for storage and for indication and transmission of fax information, and/or
- a speech memory service for storage and for indication and transmission of speech information, and/or
- a message memory service for storage and for indication and transmission of electronic messages or e-mails or SMS messages
and is implemented in at least one of the at least one communications networks.

12. Method according to one of Claims 7 to 11,
**characterized**
**in that** the subscriber-specific status information is output or can be called up via at least one communications terminal which is matched to the respective communications network and is associated with the respective subscriber.

13. Method according to Claim 12,
**characterized**
**in that** the subscriber-specific status information is output or can be called up via a wire-connected or wire-free telephone terminal, or via a computer or via a multimedia communications terminal.

14. Method according to one of Claims 7 to 13,
**characterized**
**in that** any activity of the respective subscriber in at least one of the at least one communications networks is detected and/or registered,
**in that** the subscriber-specific status information is transmitted to the respective subscriber who is active in the respective communications network.

15. Method according to one of Claims 7 to 14,
**characterized**
**in that** the collected status information is provided via a user program interface.

16. Method according to one of Claims 7 to 15,
**characterized**
**in that** the at least one communications network
- is the Internet or represents a communications network which is based on TCP/IP protocols, or is in the form of a packet-oriented or cell-based communications network, with identifiers and/or addresses of possible subscribers being stored in a databank, or
- is a mobile or wire-connected telephone network, with telephone numbers of possible subscribers being stored in the databank or in a further databank.

17. Method according to Claim 16,
**characterized**
**in that** the status information which is collected for one subscriber is transmitted to the at least one identifier and/or address and/or telephone number which addresses the respective subscriber in at least one of the at least one communications networks and is correspondingly stored.

18. Method according to one of Claims 13 to 17,
**characterized**
**in that**, on registration of an active subscriber, the registration process identifies whether the subscriber is active from his own computer, which is registered for him, or on some other computer using his identifier which is registered for him, and the subscriber-specific status information is then supplied to the corresponding computer.

19. Method according to one of Claims 10 to 18,
**characterized**
**in that** the subscriber-specific status information is supplied to the respective communications terminal as soon as it has been received from the mailbox servers.

20. Method according to one of Claims 7 to 19,
**characterized**
**in that** the collected, subscriber-specific status information is transmitted to the respective subscriber with the aid of the "Message Waiting Indication" service feature, which is configured in accordance with the ETSI standard.

## Revendications

1. Système serveur pour mettre à la disposition d'usagers des informations propres à chaque usager dans au moins un réseau de communication, **caractérisé par**
- un dispositif collecteur (1) pour collecter des informations de statut individuelles à chaque usager et qui se réfèrent à des messages de boîtes postales qui sont stockés pour un usager dans au moins un serveur de boîte postale spécifique à des services (3a, 3b, 3c) et
- un dispositif enregistreur (2) pour enregistrer l'activité d'un usager au niveau d'au moins un terminal de communication (6) dans au moins un réseau de communication (7), pour recevoir les informations de statut individuelles à chaque usager du dispositif collecteur (1) et pour envoyer à l'usager respectif les informations de statut individuelles à chaque usager,
- le dispositif enregistreur (2), lorsqu'il a enregistré un usager comme étant actif au niveau d'au moins un terminal de communication (6), envoyant automatiquement les informations de statut reçues pour cet usager à l'au moins un terminal de communication (6).

2. Système serveur selon la revendication 1, **caractérisé en ce que** le dispositif collecteur (1) met à disposition les informations d'état du dispositif enregistreur (2) via une interface de programme utilisateur (4).

3. Système serveur selon la revendication 1 ou 2, **caractérisé en ce que** l'au moins un réseau de communication (7)
- est l'internet ou représente un réseau de communication basé sur des protocoles TCP/IP ou se présente sous la forme d'un réseau de communication orienté paquets ou orienté cellules, le dispositif enregistreur (2) comportant une base de données (12) avec des identifiants et/ou des adresses d'usagers possibles ou
- est un réseau téléphonique mobile ou filaire, des numéros d'appel d'usagers possibles étant stockés dans la base de données (12) ou dans une autre base de données.

4. Système serveur selon l'une des revendications 1 à 3, **caractérisé en ce que** l'au moins un terminal de communication (6) se présente sous la forme d'un terminal téléphonique filaire ou sans fil ou sous la forme d'un ordinateur ou sous la forme d'un terminal de communication multimédia.

5. Système serveur selon la revendication 4, **caractérisé en ce que** le dispositif enregistreur (2), lors de l'enregistrement d'un usager actif, reconnaît si l'usager agit à partir de son propre ordinateur enregistré en son nom ou sur un ordinateur tiers en utilisant son identifiant enregistré en son nom, et envoie les informations de statut sur l'ordinateur adéquat.

6. Système serveur selon l'une des revendications 1 à 5, **caractérisé en ce que** le dispositif enregistreur (2) envoie les informations de statut individuelles à chaque usager sur l'au moins un terminal de communication dès qu'il les reçoit du dispositif collecteur (1).

7. Procédé pour mettre à la disposition d'usagers des informations propres à chaque usager dans au moins un réseau de communication, dans lequel
- des informations de statut individuelles à chaque usager et qui se réfèrent à des messages de boîtes postales qui sont stockés pour un usager dans au moins un serveur de boîte postale spécifique à des services (3a, 3b, 3c) sont collectées par un dispositif collecteur (1) ;
- un dispositif enregistreur (2) enregistre l'activité d'un usager au niveau d'au moins un terminal de communication (6) dans au moins un réseau de communication (7) et reçoit du dispositif collecteur (1) des informations de statut individuelles à chaque usager et envoie à l'usager respectif des informations de statut individuelles à chaque usager,
- le dispositif enregistreur (2), lorsqu'il a enregistré un usager comme étant actif au niveau d'au moins un terminal de communication (6), envoie automatiquement à l'au moins un terminal de communication (6) les informations de statut reçues pour cet usager.

8. Procédé selon la revendication 7, **caractérisé en ce que** des messages de boîtes postales individuels à chaque usager et spécifiques à des services, avec un format de message spécifique au réseau de communication et/ou spécifique à des services, et au moins partiellement différent, sont stockés dans au moins l'un des au moins un réseaux de communication.

9. Procédé selon la revendication 7 ou 8, **caractérisé en ce que** les messages de boîtes postales spécifiques à des services sont stockés dans au moins un serveur de boîte postale qui réalise un service de la technique de l'information, les messages de boîtes postales présentant un format de message adapté au service respectif de la technique de l'information.

10. Procédé selon l'une des revendications 1 à 9, **caractérisé en ce que** sont collectées des informations de statut:
- de messages de boîtes postales d'un service de la technique de l'information dans un réseau de communication et/ou
- de messages de boîtes postales de plusieurs services de la technique de l'information dans un réseau de communication et/ou
- de messages de boîtes postales d'un service de la technique de l'information dans plusieurs réseaux de communication et/ou
- de messages de boîtes postales de plusieurs services de la technique de l'information dans plusieurs réseaux de communication.

11. Procédé selon l'une des revendications 7 à 10, **caractérisé en ce que** le service de la technique de l'information comprend:
- un service de stockage ainsi que d'affichage et de transmission d'informations FAX et/ou
- un service de stockage vocal pour le stockage ainsi que pour l'affichage et la transmission d'informations vocales et/ou
- un service de stockage de messages pour stocker ainsi que pour afficher et transmettre des messages électroniques ou des e-mails ou des SMS et
est réalisé dans au moins l'un des au moins un réseaux de communication.

12. Procédé selon l'une des revendications 7 à 11, **caractérisé en ce que** les informations de statut individuelles à chaque usager sont produites en sortie ou peuvent être appelées par l'intermédiaire d'au moins un terminal de communication adapté au réseau de communication respectif et affecté à l'usager respectif.

13. Procédé selon la revendication 12, **caractérisé en ce que** les informations de statut individuelles à chaque usager sont produites en sortie ou peuvent être appelées par l'intermédiaire d'un terminal téléphonique filaire ou sans fil ou par l'intermédiaire d'un ordinateur ou par l'intermédiaire d'un terminal de communication multimédia.

14. Procédé selon l'une des revendications 7 à 13, **caractérisé en ce que**:
- une activité de l'usager respectif est détectée resp. enregistrée dans au moins l'un des au moins un réseaux de communication;
- les informations de statut individuelles à chaque usager sont transmises à l'usager respectif actif dans le réseau de communication respectif.

15. Procédé selon l'une des revendications 7 à 14, **caractérisé en ce que** les informations de statut collectées sont mises à disposition via une interface de programme utilisateur.

16. Procédé selon l'une des revendications 7 à 15, **caractérisé en ce que** l'au moins un réseau de communication
- est l'internet ou représente un réseau de communication basé sur des protocoles TCP/IP ou se présente sous la forme d'un réseau de communication orienté paquets ou orienté cellules, des identifiants et/ou des adresses d'usagers possibles étant stockés dans une base de données, ou
- est un réseau téléphonique mobile ou filaire, des numéros d'appel d'usagers possibles étant stockés dans la base de données ou dans une autre base de données.

17. Procédé selon la revendication 16, **caractérisé en ce que** les informations de statut collectées pour un usager sont transmises à l'au moins un identifiant et/ou l'au moins une adresse et/ou l'au moins un numéro d'appel qui adressent l'usager respectif dans au moins l'un des au moins un réseaux de communication et qui sont stockés en conséquence.

18. Procédé selon l'une des revendications 13 à 17, **caractérisé en ce qu'**il est reconnu, lors de l'enregistrement d'un usager actif, si l'usager agit à partir de son propre ordinateur enregistré en son nom ou sur un ordinateur tiers en utilisant son identifiant enregistré en son nom, et les informations de statut individuelles à l'usager sont alors envoyées sur l'ordinateur adéquat.

19. Procédé selon l'une des revendications 10 à 18, **caractérisé en ce que** les informations de statut individuelles à chaque usager sont envoyées sur le terminal de communication respectif dès qu'elles ont été reçues des serveurs de boîte postale.

20. Procédé selon l'une des revendications 7 à 19, **caractérisé en ce que** les informations de statut collectées et individuelles à chaque usager sont transmises à l'usager respectif à l'aide de la caractéristique de service « Message Waiting Indication » réalisée conformément au standard de l'ETSI.
